# EUROPÄISCHE PATENTSCHRIFT

(11) **EP 4 067 312 B1**
(45) Veröffentlichungstag und Bekanntmachung des Hinweises auf die Patenterteilung: **18.12.2024**
(21) Anmeldenummer: 22164579.9
(22) Anmeldetag: 25.03.2022
(51) Int. Cl.: C02F 1/00

(54) **FILTERPATRONE UND FILTERTASCHE FÜR EINE WASSERFILTERVORRICHTUNG**
FILTER CARTRIDGE AND FILTER BAG FOR A WATER FILTER DEVICE
CARTOUCHE FILTRANTE ET SAC FILTRE POUR UN DISPOSITIF DE FILTRATION D'EAU

(30) Priorität: 01.04.2021 DE 202021001244 U
(43) Veröffentlichungstag der Anmeldung: 05.10.2022
(73) Patentinhaber: Götz, Christoph, 30179 Hannover (DE)
(72) Erfinder: Götz, Christoph, 30179 Hannover (DE)
(74) Vertreter: Rossmanith, Manfred

(56) Entgegenhaltungen:
- EP-A1- 2 583 731
- DE-U1- 202019 003 368
- GB-A- 2 269 586
- US-A1- 2017 007 949

## Beschreibung

### Gebiet

Die Erfindung betrifft eine Filtertasche für eine wiederverwendbare Filterpatrone für eine Wasserfiltervorrichtung, eine Filterpatrone sowie eine Wasserfiltervorrichtung.

### Hintergrund

Filterpatronen für Wasserfiltervorrichtung, insbesondere Tischwasserfiltervorrichtungen, umfassen ein Kunststoffgehäuse, das mit einem Filtermedium gefüllt ist. Das Filtermedium ist beispielsweise Aktivkohle und ein lonenaustauschermaterial in Granulatform. Das Filtermedium entfernt bzw. reduziert aus dem zu filternden Rohwasser zum Beispiel Partikel und Kalk, um Geschmack und Geruch des gefilterten Wassers zu verbessern. Beim Einsatz des gefilterten Wassers in Maschinen und Geräten wie beispielsweise Kaffeemaschinen wird deren Verkalkung vermindert.

Das Filtermedium verbraucht sich im Laufe der Benutzung der Wasserfiltervorrichtung und muss daher regelmäßig ausgetauscht werden, zum Beispiel alle 4-6 Wochen. Der Austausch des Filtermaterials erfolgt üblicherweise durch Austausch der gesamten Filterpatrone, d.h. das Plastikgehäuse der Filterpatrone wird mit dem Filtermaterial entsorgt, obwohl das Kunststoffgehäuse im Betrieb der Wasserfiltervorrichtung keinem Verschleiß oder Verbrauch unterworfen ist. Durch diese Vorgehensweise entsteht unnötig viel Plastikmüll.

Um Plastikmüll zu vermeiden, schlägt die DE 9108688 U1 eine wiederverwendbare Filterpatrone mit einem zweiteiligen Gehäuse vor, das geöffnet werden kann, um das verbrauchte Filtermedium gegen neues unverbrauchtes Filtergranulat auszutauschen. Bei der Entfernung des verbrauchten Granulats kann es allerdings zu Verunreinigungen kommen, weil sich das Granulat manchmal nur durch Ausspülen aus dem Gehäuse der Filterpatrone entfernen lässt und dabei die Außenseite der Patrone und/oder ein Spülbecken verunreinigt.

Die DE 20 2019 003 368 U1 schlägt deshalb eine wiederverwendbare Filterpatrone vor, bei der das granulatförmige Filtermedium in einer geschlossenen Filtertasche aufgenommen ist. Die wiederverwendbare Filterpatrone lässt sich öffnen, sodass die Filtertasche mit dem verbrauchten Filtermaterial einfach und sauber zu entnehmen und durch eine neue Filtertasche mit unverbrauchten Filtermaterial zu ersetzen ist. Bei diesem Wechsel entstehen keine Verunreinigungen durch das Filtergranulat, das von der Filtertasche vollständig eingeschlossen ist. Gleichzeitig ist der zusätzliche Materialverbrauch einer solchen Filtertasche auf die Filtertasche selbst beschränkt, während das Gehäuse der Filterpatrone weiterverwendet wird. Für den Einbau in bestimmte Wasserfiltervorrichtungen ist es notwendig, dass die Filterpatrone bodenseitig in der Mitte eine im Wesentlichen zylindrische Einstülpung aufweist, damit die Filterpatrone in einen Einlauftrichter der betreffenden Wasserfiltervorrichtung passt. Infolgedessen ist auch die vorgeschlagene Filtertasche mit einer entsprechenden Einstülpung versehen, um den Innenraum der Filterpatrone möglichst vollständig auszufüllen.

Die EP 2 583 731 A1 beschreibt eine Filterpatrone mit einem becherförmigen Unterteil. Das Unterteil weist einen bogenförmigen Einzug auf, der für einen veränderlichen Filterquerschnitt sorgt. Die Länge des Einzuges kann bis zu 80 % der Gesamtlänge des Bodens der Filterpatrone einnehmen. Das Unterteil ist mit Filtermaterial gefüllt. Das Filtermaterial ist als loses granulatförmiges Filtermaterial direkt in das Gehäuse des Unterteils gefüllt.

Hiervon ausgehend ist es eine Aufgabe der vorliegenden Erfindung, eine gegenüber dem Stand der Technik verbesserte Filterpatrone bzw. Wasserfiltervorrichtung zu schaffen.

### Beschreibung der Erfindung

Nach einem ersten Aspekt der vorliegenden Erfindung wird eine Filterpatrone für eine Wasserfiltervorrichtung mit einer Filtertasche vorgeschlagen. Die Filterpatrone ist zweiteilig mit einem von einem Gehäuseunterteil abnehmbaren Deckel ausgebildet und weist einen von dem Gehäuseunterteil abnehmbaren Deckel sowie einen Innenraum zur Aufnahme einer Filtertasche auf. Die Form der Filtertasche ist an die Gestalt des Innenraums der Filterpatrone angepasst. Eine einem Boden der Filtertasche gegenüberliegende Seite weist einen Dichtrand auf. Die Filtertasche weist einen bogenförmigen Einzug in dem Boden der Filtertasche entlang einer ersten Querschnittslinie auf. Die Tiefe des Einzugs ist in der Mitte der Filtertasche am größten. Weiterhin ist an einer Unterseite des Deckels ein umlaufender Schnapprand mit einem Rastvorsprung vorgesehen, der einen korrespondierenden an dem Gehäuseunterteil angeordneten Rastvorsprung übergreift. Insbesondere der Schnapprand ist elastisch ausgebildet und stellt eine form- bzw. kraftschlüssige Verbindung zwischen dem Deckel und dem Gehäuseunterteil her. An der Unterseite des Deckels ist eine Klemmleiste angeordnet, die insbesondere einen dreiecksförmigen Querschnitt aufweist, so dass der Dichtrand der Filtertasche zwischen einer Stirnseite des Gehäuseunterteils und der Klemmleiste eingeklemmt ist. Die erfindungsgemäß ausgestaltete Filterpatrone hat in der Praxis den Vorteil, dass eine hohe Filterleistung bzw. Fließgeschwindigkeit bei gleichzeitig guter Filterwirkung erreicht wird. Das steht im Gegensatz zu den Eigenschaften von herkömmlichen Patronen, bei denen eine hohe Fließgeschwindigkeit üblicherweise mit einer vergleichsweise schlechteren Filterwirkung einhergeht. Der Dichtrand an der Filtertasche verhindert, dass ungefiltertes Wasser an der Filtertasche und dem darin enthaltenen Filtermedium vorbeifließt, was die Filterwirkung der Wasserfiltervorrichtung ungünstig beeinflussen würde.

Der Deckel ist von dem Gehäuseunterteil der Filterpatrone abnehmbar und ermöglicht einen einfachen Wechsel der Filtertasche.

Der Deckel kann viele Male von dem Gehäuseunterteil für einen Austausch der Filtertasche abgenommen werden, wodurch eine lange Gebrauchsdauer des Gehäuses der Filterpatrone gewährleistet ist, was entsprechende Vorteile in Bezug auf Abfallvermeidung mit sich bringt.

Bei zusammengebauter Filterpatrone ist der Dichtrand der Filtertasche zwischen einer Stirnseite des Gehäuseunterteils und der Klemmleiste eingeklemmt Mit der Klemmleiste wird erreicht, dass die von dem Schnapprand erzeugte Klemmkraft in einen hohen Anpressdruck auf den Dichtrand der Filtertasche umgewandelt wird und dadurch eine gute Abdichtung der Filtertasche bzw. des Dichtrandes der Filtertasche gegenüber dem Gehäuseunterteil der Filterpatrone erzielt wird.

Gemäß einer vorteilhaften Ausführungsform hat der bogenförmige Einzug eine bestimmte Länge, die beidseits von säulenförmigen Abschnitten begrenzt ist. Diese Ausgestaltung der Filtertasche hat fertigungstechnische Vorteile und führt zu besonders günstigen Strömungsverhältnissen in der Filtertasche.

Bei einer besonders bevorzugten Ausführungsform entspricht die Länge des bogenförmigen Einzugs 40-80% der Länge der ersten Querschnittslinie, insbesondere 50-70%. Der Anteil der Querschnittslinie, der nicht von dem bogenförmigen Einzug überdeckt wird, wird im Wesentlichen von den säulenförmigen Abschnitten eingenommen, wobei die Abmessung der säulenförmigen Abschnitte entlang der ersten Querschnittslinie ungefähr gleich ist.

Bei einer Ausführungsform weist die Filtertasche eine Längsseite und eine Breitseite auf, die an die Abmessungen des Innenraums der Filterpatrone angepasst sind, wobei die Breitseite eine kleinere Länge als die Längsseite hat und dass die erste Querschnittslinie parallel zu der Längsseite oder parallel zu der Breitseite der Filtertasche verläuft. Der Einzug erstreckt sich mithin entlang der Längs- oder Breitseite der Filtertasche, was sich günstig auf die Strömungsverhältnisse innerhalb der Filtertasche auswirkt.

Bei einer weiteren Ausführungsform der Filterpatrone erstreckt sich der Einzug der Filtertasche auch entlang der zweiten Querschnittslinie bogenförmig. Wenn die erste Querschnittslinie entlang der Längsseite und die zweite Querschnittslinie entlang der Breitseite der Filtertasche verläuft oder umgekehrt, dann bildet der Einzug einen Hohlraum, der im Wesentlichen einem Ellipsoidabschnitt entspricht.

Durch die unterschiedliche Gestaltung des Einzugs werden zum einen die Strömungsverhältnisse innerhalb der Filtertasche und zum anderen das Volumen der Filtertasche beeinflusst. Die Gestaltung des Einzugs in der Filtertasche bietet dadurch Möglichkeiten, Filterleistung und Filterwirkung einer Filterpatrone zu verändern. In der Praxis besteht somit die Möglichkeit, Filterpatronen mit unterschiedlichen Eigenschaften herzustellen, die identische Gehäuse der Filterpatrone aufweisen und sich nur durch die in die Filterpatrone eingesetzte Filtertasche unterscheiden. Dieses Konzept bringt Kostenvorteile bei der Lagerhaltung und Herstellung der Filterpatrone mit sich und bietet eine hohe Flexibilität für einen Nutzer der Filterpatrone, der die Eigenschaften der Filterpatrone durch entsprechende Auswahl einer geeigneten Filtertasche bestimmen kann.

Vorteilhafterweise ist die Filtertasche aus einem textilen Material, insbesondere einem Vliesmaterial, hergestellt. Das Vliesmaterial ist flüssigkeitsdurchlässig und insbesondere wasserdurchlässig. Gleichzeitig wirkt das Vliesmaterial wie ein dem Filtermaterial vorgeschalteter Vorfilter, um in dem ungefilterten Rohwasser enthaltene Partikel festzuhalten. Außerdem verhindert das Vliesmaterial, dass das granulatförmige Filtermedium aus der Filtertasche entweichen kann. Das Vliesmaterial kann aus einem geeigneten Kunststoff hergestellt sein.

Es hat sich als zweckmäßig erwiesen, die Filtertasche mit einem Taschenunterteil zu gestalten, das mit einem Deckvlies verschlossen ist. Diese Gestaltung der Filtertasche hat herstellungstechnische Vorteile.

Vorteilhafterweise ist das Deckvlies mit dem Taschenunterteil stoffschlüssig verbunden, insbesondere aufgesiegelt, geschweißt oder geklebt.

Schließlich wird nach einem zweiten Aspekt eine Wasserfiltervorrichtung mit einer Filterpatrone gemäß dem ersten Aspekt der Erfindung vorgeschlagen. Die erfindungsgemäße Wasserfiltervorrichtung verwirklicht sämtliche Vorteile, die bereits im Zusammenhang mit der erfindungsgemäßen Filterpatrone beschrieben wurden.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine Filtervorrichtung in Gestalt eines Wasserkruges in einer perspektivischen Ansicht;
- Fig. 2: eine perspektivische Ansicht einer Filterpatrone schräg von oben;
- Fig. 3: die Filterpatrone aus Figur 2 mit abgenommenem Deckel;
- Fig. 4A: eine Filtertasche, die in der Filterpatrone aus Figur 2 aufgenommen ist, in einer Ansicht schräg von oben;
- Fig. 4B: ein Längsschnitt durch die Filtertasche aus Figur 4A;
- Fig. 4C: die Filtertasche aus Figur 4A in einer Ansicht schräg von unten; und
- Fig. 5: ein Querschnitt durch einen Rand der Patrone aus Figur 2.

Gleiche oder ähnliche Elemente sind in den Figuren mit gleichen oder ähnlichen Bezugszeichen versehen.

### Ausführungsbeispiel

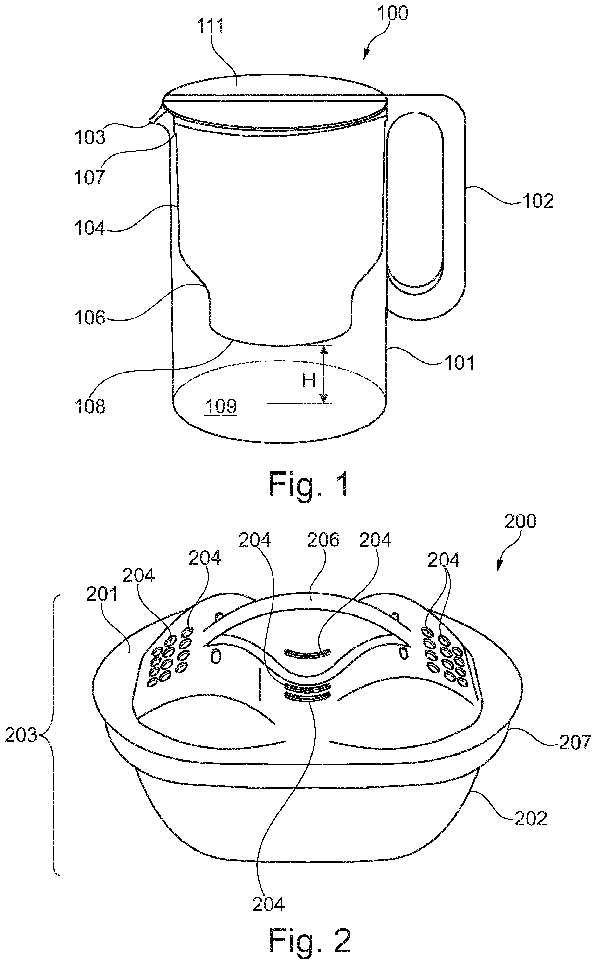

Figur 1 zeigt in einer perspektivischen Ansicht von der Seite ein Ausführungsbeispiel einer Vorrichtung 100 zur Filtration von Flüssigkeiten. Die Vorrichtung 100 ist bei dem dargestellten Ausführungsbeispiel als Tischwasserkrug ausgebildet und weist ein Sammelgefäß 101 zur Aufnahme von gefiltertem Wasser auf. An dem Sammelgefäß 101 ist zu seiner Handhabung ein Griff 102 angeordnet. Weiterhin weist das Sammelgefäß 101 an seinem oberen Rand eine Ausgießtülle 103 auf. Im Gebrauch der Vorrichtung kann ein Benutzer das Sammelgefäß 101 an dem Griff 102 fassen und über die Ausgießtülle 103 gefiltertes Wasser beispielsweise in ein Glas (nicht dargestellt) ausgießen. In das Sammelgefäß 101 ist ein oben offener Einlauftrichter 104 eingesetzt, der in seinem unteren Bereich eine Aufnahmekammer 106 für eine Filterpatrone 200 (Figur 2) aufweist. Der Einlauftrichter 104 weist an seinem oberen Rand einen umlaufenden Flansch 107 auf, der auf einer Kante des Sammelgefäßes 101 aufliegt, so dass der Einlauftrichter 104 in dem Sammelgefäß 101 gehaltert ist. Ein Boden 108 des Einlauftrichters 104 hat dabei einen Abstand H von einem Boden 109 des Sammelgefäßes 101. Der Boden 108 des Einlauftrichters 104 weist eine oder mehrere Auslauföffnungen auf, aus der oder denen gefiltertes Wasser aus dem Einlauftrichter 104 in das Sammelgefäß 101 fließt. Der Einlauftrichter 104 ist auf seiner Oberseite mit einem abnehmbaren Deckel 111 verschlossen, der verhindert, dass im Gebrauch der Filtervorrichtung 100 Staub oder Schmutzpartikel in den Einlauftrichter 104 hineinfallen.

In Figur 2 ist eine schematische perspektivische Ansicht schräg von oben auf eine Filterpatrone 200 dargestellt. Ein Gehäuseoberteil oder Deckel 201 bildet eine Oberseite der Filterpatrone 200, das auf einem becherförmigen Gehäuseunterteil 202 sitzt. Der Deckel 201 und das Gehäuseunterteil 202 bilden gemeinsam ein Gehäuse der Filterpatrone 200, das als Ganzes mit dem Bezugszeichen 203 bezeichnet ist. In dem Gehäuse 203 der Filterpatrone ist Filtermaterial aufgenommen. Das Filtermaterial liegt zum Beispiel als Filtergranulat vor, das in einer in Figur 2 nicht sichtbaren Filtertasche aufgenommen ist. Es können unterschiedliche Filtermaterialien zum Einsatz kommen, um unerwünschte Stoffe, Ionen und/oder Partikel aus dem Wasser zu entfernen. Der Deckel 201 weist eine Mehrzahl von Einlauföffnungen 204 auf, durch die ungefilterte Flüssigkeit, insbesondere Wasser, in das Innere der Filterpatrone 200 strömt. Ein Griffteil 206 ermöglicht es, die Filterpatrone 200 zu fassen und für einen allfälligen Wechsel der Filterpatrone 200 aus der Aufnahmekammer 106 des Einlauftrichters 104 herauszuziehen. Am oberen Rand des Gehäuseunterteils 201 ist ein Dichtrand 207 erkennbar.

Das Gehäuseunterteil hat eine im Wesentlichen ovale Form, die in Längsrichtung zum Beispiel 70-80 mm und in Querrichtung 40-50 mm lang ist. Das Gehäuseoberteil 201 ist von dem Gehäuseunterteil 202 abnehmbar, wodurch das Innere der Filterpatrone 200 zugänglich wird.

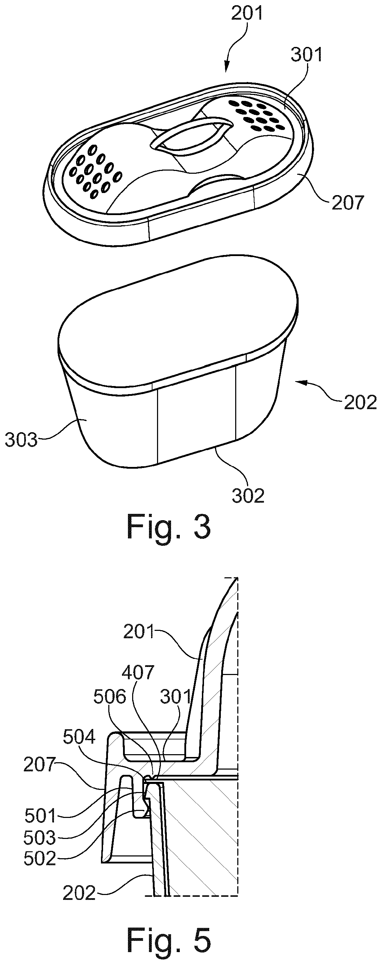

In Figur 3 ist die Filterpatrone 200 aus Figur 2 mit abgenommenem Deckel 201 dargestellt. Der Deckel 201 weist einen umlaufenden Flansch 301 auf, an welchen der Dichtrand 207 einstückig an geformt ist. Die Verbindung zwischen dem Deckel 201 in dem Gehäuseunterteil 202 ist durch eine Schnappverbindung hergestellt, die weiter unten im Zusammenhang mit Figur 5 im Einzelnen beschrieben ist. Die Schnappverbindung lässt sich von einem Benutzer lösen, indem der Benutzer das Gehäuseunterteil 202 festhält und an den Griffteil 206 zieht. Sobald das Gehäuseoberteil 201 aufgenommen ist, ist das Innere der Filterpatrone 200 zugänglich, wo bei einer funktionsfähigen Filterpatrone 200 eine mit Filtergranulat gefüllte Filtertasche aufgenommen ist. Das Gehäuseunterteil 202 weist eine umlaufende seitliche Begrenzungswand 303 sowie auf der dem Deckel 201 gegenüberliegenden Seite einen Patronenboden 302 auf.

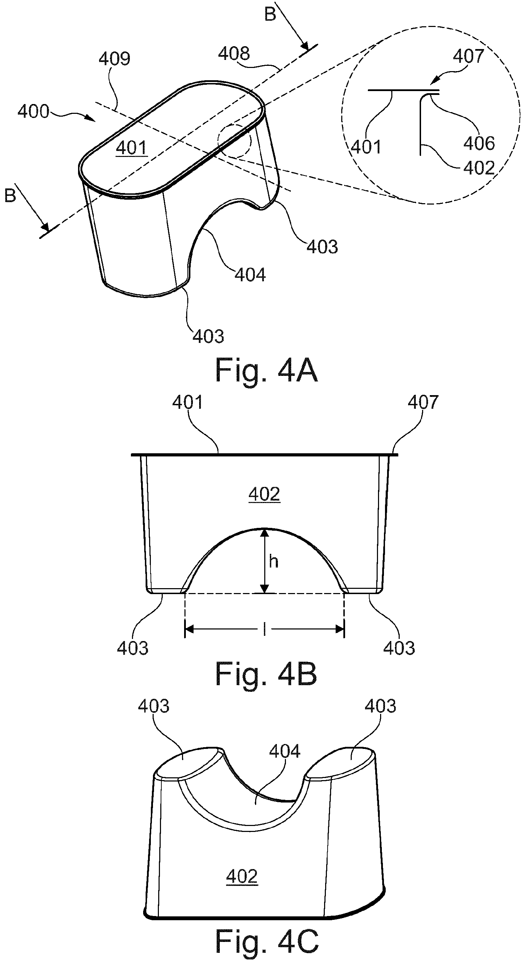

In Figur 4A ist eine Filtertasche 400 in einer Ansicht schräg von oben dargestellt. Die Filtertasche 400 weist ein flaches Deckvlies 401 auf, mit dem ein im wesentlichen becherförmiges Taschenunterteil 402 verschlossen ist. Die Filtertasche 400 enthält das eingangs erwähnt Filtergranulat. Das Taschenunterteil 402 ist genauso wie das Deckvlies 401 aus einem feinporigen Vliesmaterial hergestellt, das einerseits für Flüssigkeiten, insbesondere für Wasser, durchlässig ist und andererseits das Filtergranulat sicher einschließt. Das Deckvlies 401 wirkt auch als mechanischer Filter, der partikelförmige Verunreinigungen zurückhält, die in dem Rohwasser enthalten sein könnten. Anstelle von einem Vliesmaterial können bei anderen Ausführungsbeispielen gewebte, gewirkte oder gestrickte Gebilde, insbesondere flache textile Gebilde verwendet sein. Auch Kombinationen unterschiedlicher Materialien sind möglich.

Die Form der Filtertasche 400 entspricht in ihrer Gestalt und ihren Abmessungen dem Innenraum der Filterpatrone 200. Die Filtertasche hat folglich in einer horizontalen Querschnittsebene eine ovale Form, die der Form des Gehäuseunterteils 202 entspricht und den Innenraum der Filterpatrone im Wesentlichen ausfüllt. An ihren schmalen Seiten weist die Filtertasche 400 säulenförmige Abschnitte 403 auf, die über einen bogenförmigen Einzug 404 miteinander verbunden sind. Die Unterseiten der säulenförmigen Abschnitte 403 und der bogenförmige Einzug 404 bilden einen Boden der Filtertasche 400bzw. des Taschenunterteils.

Das Taschenunterteil 402 weist einen umlaufenden horizontalen Flansch 406 auf, auf den das Deckvlies 401 aufgesiegelt ist. In anderen Ausführungsbeispielen erfolgt die Verbindung zwischen dem Taschenunterteil 402 und dem Deckvlies 401 durch Kleben, Schweißen oder andere geeignete Verbindungstechniken. Der horizontale Flansch 406 bildet gemeinsam mit dem aufgesiegelten Bereich des Deckvlieses 401 einen Dichtrand 407, der auch in einem vergrößerten Ausschnitt in Figur 4A dargestellt ist. In dem vergrößerten Ausschnitt ist für eine bessere Unterscheidbarkeit zwischen dem horizontalen Flansch 406 und dem Deckvlies 401 ein kleiner Abstand gezeigt, der in Wirklichkeit nicht existiert. Die gestrichelte Linie 408 bezeichnet eine erste Querschnittslinie und die gestrichelte Linie 409 eine zweite Querschnittslinie.

Figur 4B zeigt einen Querschnitt durch die Filtertasche 400 entlang der Schnittebene B-B, die entlang der in Figur 4A gezeigten ersten Querschnittslinie 408 verläuft. In dieser Darstellung sind der umlaufende Dichtrand 407 und der Einzug 404 gut sichtbar. Insbesondere ist gut zu erkennen, dass sich der Einzug 404 wie ein romanischer Bogen mit einer Scheitelhöhe h dem Deckvlies 401 entgegenwölbt. Die Scheitelhöhe h entspricht einer Tiefe des Einzugs 404. Die Spannweite des Einzuges bzw. des Bogens 404 ist I.

Schließlich zeigt Figur 4C eine Ansicht der Filtertasche schräg von unten.

Die relativen Größenverhältnisse der Filtertasche 400, wie sie in den Figuren 4A bis 4C dargestellt sind, sind nur beispielhaft und können in anderen Ausführungsbeispielen abweichen. Insbesondere kann der Bogen 404 eine größere oder kleinere Höhe h und/oder eine größere oder kleinere Spannweite I aufweisen.

Bei dem in den Figuren 4A bis 4C erstreckt sich der Bogen entlang der längeren Seite der ovalen Filtertasche 400, während der Einzug parallel zu der kürzeren Seite der ovalen Filtertasche 400 einer Geraden folgt. Der Einzug 404 hat dadurch eine Gestalt wie ein romanischer Brückenbogen.

Bei einem abgewandelten Ausführungsbeispiel wölbt sich der Bogen hingegen entlang der kürzeren Seite der ovalen Filtertasche 400, während der Einzug parallel zu der längeren Seite der ovalen Filtertasche 400 einer Geraden folgt. Schließlich ist bei einem weiteren Ausführungsbeispiel vorgesehen, dass der Einzug 404 sowohl entlang der Längsrichtung als auch der Querrichtung der Filtertasche 400 bogenförmig erstreckt, sodass der Einzug eine Gestalt annimmt, die einem Ellipsoidabschnitt ähnlich ist.

Figur 5 zeigt einen Querschnitt durch den Rand der Filterpatrone aus Figur 2. In dieser Darstellung ist ein umlaufender Schnapprand 501 gezeigt, der sich ausgehend von dem Flansch 301 nach unten erstreckt. Auf seiner in radialer Richtung innen liegenden Seite weist der Schnapprand 501 einen Rastvorsprung 502 auf. Bei aufgesetztem Deckel 201 übergreift der Rastvorsprung 502 einen Rastvorsprung 503, der an der Oberkante des Gehäuseunterteils 202 angeformt ist. Der Rastvorsprung 503 ist auf der Außenseite des Gehäuseunterteils 202 angeordnet. Wenn der Deckel 201 auf das Gehäuseunterteil 202 aufgesetzt wird, verformen sich der Schnapprand 501 und/oder das Gehäuseunterteil 202 elastisch, so dass die Rastvorsprünge 502,503 aneinander vorbei gleiten. Sobald die Rastvorsprünge 502,503 einander passiert haben, kehren der Schnapprand 501 und/oder das Gehäuseunterteil 202 in ihre ursprüngliche Form zurück und stellen eine form- bzw. kraftschlüssige Verbindung zwischen dem Gehäuseunterteil 202 und dem Deckel 201 her.

Wenn die Filtertasche 400 in das Gehäuseunterteil 202 der Filterpatrone eingesetzt ist, liegt der Dichtrand 407 auf einer Stirnseite 504 des becherförmigen Gehäuseunterteils 202 auf und wird zwischen der Stirnseite 504 des Gehäuseunterteils 202 und einer an einer Unterseite des Deckels 201 angeordneten umlaufenden Klemmleiste 506 geklemmt, wenn das Gehäuseoberteil auf das Gehäuseunterteil 202 aufgesetzt ist. Die Klemmleiste 506 verläuft parallel zu dem Schnapprand 501, der somit einen gleichmäßigen Anpressdruck der Klemmleiste 506 auf dem Dichtrand 407 erzeugt. Die Klemmleiste 506 hat einen dreiecksförmigen Querschnitt, dessen Spitze zu dem Dichtrand 407 hin gerichtet ist. Die Klemmkraft des Schnapprandes 501 erzeugt dadurch einen möglichst großen Anpressdruck entlang der Klemmleiste 506, um eine gute Abdichtung des Dichtrandes 407 und damit der Filtertasche 400 gegenüber dem Gehäuseunterteil 202 zu erreichen. Ungefiltertes Wasser, das durch die Einlassöffnungen 204 in die Filterpatrone einströmt, kann daher nicht an der Filtertasche 400 vorbeifließen, sondern nur durch die Filtertasche 400 hindurch, wobei das Wasser mit dem Filtergranulat in Kontakt kommt und gefiltert wird.

Schnappverbindungen unterschiedlicher Bauart sind im Stand der Technik bekannt. Alternativ zu der in Figur 5 gezeigten Schnappverbindung können zum Beispiel auch Rasthaken, die in entsprechende Rastöffnungen eingreifen, an dem Gehäuseoberteil 201 bzw. dem Gehäuseunterteil 202 vorgesehen sein.

In der Praxis hat es sich gezeigt, dass Filterpatronen, die mit einer erfindungsgemäßen Filtertasche ausgerüstet sind, eine im Vergleich zu herkömmlichen Filterpatronen hohe Filterleistung bzw. Fließgeschwindigkeit haben, aber dennoch eine gute Filterwirkung erreichen. Erfahrungsgemäß ist es nämlich so, dass eine hohe Fließgeschwindigkeit zu einer verringerten Filterwirkung führt und umgekehrt. Für die vorgeschlagene Filtertasche scheint dieser Zusammenhang nicht zu gelten. Der Einzug auf der Unterseite der Filtertasche scheint einen günstigen Einfluss auf den Wasserfluss in der Filterpatrone zu haben, sodass der beschriebene Vorteil erreicht wird, nämlich hohe Durchflussmenge bei gleichzeitig guter Filterwirksamkeit. Unter der Filterwirksamkeit ist hierbei insbesondere die Entfernung von Partikeln und unerwünschten Stoffen sowie der Austausch von Ionen zu verstehen.

Durch die Auswahl des Vliesmaterials für die Filtertasche und die Formgebung des Einzuges 404 sind Filtertaschen bzw. Filterpatronen mit unterschiedlichen Eigenschaften in Bezug auf Durchflussgeschwindigkeit und Filterwirkung darstellbar.

### Bezugszeichenliste

| | | | |
|---|---|---|---|
| 100 | Filtervorrichtung | 400 | Filtertasche |
| 101 | Sammelgefäß | 401 | Deckvlies |
| 102 | Griff | 402 | Taschenunterteil |
| 103 | Ausgießtülle | 403 | Säulenförmiger Abschnitt |
| 104 | Einlauftrichter | 404 | Bogen, Einzug |
| 106 | Aufnahmekammer | 406 | Flansch |
| 107 | umlaufender Flansch | 407 | Dichtrand |
| 108 | Einlauftrichterboden | 408 | erste Querschnittslinie |
| 109 | Gefäßboden | 409 | zweite Querschnittslinie |
| 111 | Deckel | 501 | Schnapprand |
| | | 502,503 | Rastvorsprung |
| 200 | Filterpatrone | 504 | Stirnseite |
| 201 | Gehäuseoberteil, | 506 | Klemmleiste |
| | Deckel | | |
| 202 | Gehäuseunterteil | | |
| 203 | Gehäuse als Ganzes | | |
| 204 | Einlauföffnungen | | |
| 206 | Griffteil | | |
| 207 | Dichtrand | | |
| 301 | umlaufender Flansch | | |
| 302 | Patronenboden | | |
| 303 | Seitliche Begrenzungswand | | |

## Patentansprüche

1. Filterpatrone für eine Wasserfiltervorrichtung mit einer Filtertasche (400), wobei die Filterpatrone (200) zweiteilig ausgebildet ist und ein Gehäuseunterteil (202) und einen von dem Gehäuseunterteil abnehmbaren Deckel (201) sowie einen Innenraum zur Aufnahme einer Filtertasche (400) aufweist, **dadurch gekennzeichnet, dass** die Form der Filtertasche an die Gestalt des Innenraums der Filterpatrone (200) angepasst ist, dass eine einem Boden der Filtertasche gegenüberliegende Seite einen Dichtrand (407) aufweist, dass die Filtertasche einen bogenförmigen Einzug (404) in dem Boden der Filtertasche entlang einer ersten Querschnittslinie aufweist, wobei die Tiefe (h) des Einzugs (404) in der Mitte der Filtertasche am größten ist, dass an einer Unterseite des Deckels (201) ein umlaufender Schnapprand (501) mit einem Rastvorsprung (502) vorgesehen ist, der einen korrespondierenden an dem Gehäuseunterteil (202) angeordneten Rastvorsprung (503) übergreift, wobei insbesondere der Schnapprand (501) elastisch ausgebildet ist und eine form- bzw. kraftschlüssige Verbindung zwischen dem Deckel (201) und dem Gehäuseunterteil (202) herstellt; und dass an der Unterseite des Deckels (201) eine Klemmleiste (506) angeordnet ist, die insbesondere einen dreiecksförmigen Querschnitt aufweist, so dass der Dichtrand der Filtertasche zwischen einer Stirnseite des Gehäuseunterteils und der Klemmleiste eingeklemmt ist.

2. Filterpatrone nach Anspruch 1, **dadurch gekennzeichnet, dass** der bogenförmige Einzug (404) eine bestimmte Länge (I) hat, die beidseits von säulenförmigen Abschnitten (403) begrenzt ist.

3. Filterpatrone nach Anspruch 2, **dadurch gekennzeichnet, dass** die Länge des bogenförmigen Einzugs 40-80% der Länge der ersten Querschnittslinie entspricht, insbesondere 50-70%.

4. Filterpatrone nach Anspruch 1, **dadurch gekennzeichnet, dass** die Filtertasche (400) eine Längsseite und eine Breitseite aufweist, die an die Abmessungen des Innenraums der Filterpatrone (200) angepasst sind, wobei die Breitseite eine kleinere Länge als die Längsseite hat und dass die erste Querschnittslinie parallel zu der Längsseite oder parallel zu der Breitseite der Filtertasche (400) verläuft.

5. Filterpatrone nach einem der vorstehenden Ansprüche, **dadurch gekennzeichnet, dass** der Einzug (404) sich entlang einer zweiten Querschnittslinie erstreckt, die senkrecht zu der ersten Querschnittslinie verläuft, und einer Geraden folgt.

6. Filterpatrone nach einem der vorstehenden Ansprüche, **dadurch gekennzeichnet, dass** der Einzug (404) entlang einer zweiten Querschnittslinie, die senkrecht zu der ersten Querschnittslinie verläuft, einen zweiten Bogen beschreibt.

7. Filterpatrone nach einem der vorstehenden Ansprüche, **dadurch gekennzeichnet, dass** die Filtertasche (400) aus einem textilen Material, insbesondere einem Vliesmaterial, hergestellt ist.

8. Filterpatrone nach einem der vorstehenden Ansprüche, **dadurch gekennzeichnet, dass** die Filtertasche (400) ein Taschenunterteil (402) aufweist, das mit einem Deckvlies (401) verschlossen ist, wobei das Deckvlies (401) mit dem Taschenunterteil (402) insbesondere stoffschlüssig verbunden ist, insbesondere aufgesiegelt, geschweißt oder geklebt ist.

9. Wasserfiltervorrichtung mit einer Filterpatrone nach einem der vorstehenden Ansprüche.

## Claims

1. A filter cartridge for a water filter device with a filter bag (400), wherein the filter cartridge (200) is formed in two pieces and has a lower housing part (202) and a cover (201), which can be removed from the lower housing part, as well as an interior space for receiving a filter bag (400), **characterized in that** the form of the filter bag is adapted to the shape of the interior space of the filter cartridge (200), that a side lying opposite a bottom of the filter bag has a sealing edge (407), that the filter bag has a curved feeder (404) in the bottom of the filter bag along a first cross-sectional line, wherein the depth (h) of the feeder (404) is largest in the center of the filter bag, that a circumferential snap-on edge (501) with a latching projection (502), which engages over a corresponding latching projection (503) arranged on the bottom housing part (202), is provided on an underside of the cover (201), wherein in particular the snap-on edge (501) is formed elastically and establishes a positive or non-positive connection, respectively, between the cover (201) and the lower housing part (202); and that a clamping strip (506), which in particular has a triangular cross section, is arranged on the underside of the cover (201), so that the sealing edge of the filter bag is clamped between a front side of the lower housing part and the clamping strip.

2. The filter cartridge according to claim 1, **characterized in that** the curved feeder (404) has a certain length (I), which is delimited on both sides by column-shaped sections (403).

3. The filter cartridge according to claim 2, **characterized in that** the length of the curved feeder corresponds to 40-80% of the length of the first cross-sectional line, in particular to 50-70%.

4. The filter cartridge according to claim 1, **characterized in that** the filter bag (400) has a longitudinal side and broad side, which are adapted to the dimensions of the interior space of the filter cartridge (200), wherein the broad side has a smaller length than the longitudinal side and that the first cross-sectional line runs parallel to the longitudinal side or parallel to the broad side of the filter bag (400).

5. The filter cartridge according to any one of the preceding claims, **characterized in that** the feeder (404) extends along a second cross-sectional line, which runs perpendicular to the first cross-sectional line, and follows a straight line.

6. The filter cartridge according to any one of the preceding claims, **characterized in that** the feeder (404) describes a second curve along a second cross-sectional line, which runs perpendicular to the first cross-sectional line.

7. The filter cartridge according to any one of the preceding claims, **characterized in that** the filter bag (400) is made of a textile material, in particular a nonwoven material.

8. The filter cartridge according to any one of the preceding claims, **characterized in that** the filter bag (400) has a lower bag part (402), which is closed with a covering nonwoven (401), wherein the covering nonwoven (401) is connected to the lower bag part (402), in particular by means of a substance-to-substance bond, in particular sealed on, welded or adhered.

9. A water filter device with a filter cartridge according to any one of the preceding claims.

## Revendications

1. Cartouche filtrante pour un dispositif de filtration d'eau doté d'une poche filtrante (400), la cartouche filtrante (200) étant réalisée en deux parties et présentant une partie inférieure du boîtier (202) et un couvercle (201) pouvant être retiré de la partie inférieure du boîtier, ainsi qu'un espace intérieur pour recevoir une poche filtrante (400), **caractérisée en ce que** la forme de la poche filtrante est adaptée à la forme de l'espace intérieur de la cartouche filtrante (200), **en ce qu'**un côté opposé à un fond de la poche filtrante présente un bord d'étanchéité (407), **en ce que** la poche filtrante présente un renfoncement en forme d'arc (404) dans le fond de la poche filtrante le long d'une première ligne de section transversale, la profondeur (h) du renfoncement (404) étant la plus grande au centre de la poche filtrante, **en ce qu'**un bord d'encliquetage (501) périphérique avec une saillie d'encliquetage (502), qui recouvre une saillie d'encliquetage (503) correspondante disposée sur la partie inférieure du boîtier (202), est prévu sur une face inférieure du couvercle (201), le bord d'encliquetage (501) en particulier étant de conception élastique et formant une liaison par complémentarité de forme ou une liaison par complémentarité de poids entre le couvercle (201) et la partie inférieure du boîtier (202) ; et **en ce qu'**une barrette de serrage (506) qui présente en particulier une section transversale triangulaire, de sorte que le bord d'étanchéité de la poche filtrante est serré entre une face frontale de la partie inférieure du boîtier et la barrette de serrage, est disposée sur la face inférieure du couvercle (201).

2. Cartouche filtrante selon la revendication 1, **caractérisée en ce que** le renfoncement en forme d'arc (404) a une longueur définie (I) qui est limitée des deux côtés par des parties en forme de colonne (403).

3. Cartouche filtrante selon la revendication 2, **caractérisée en ce que** la longueur du renfoncement en forme d'arc correspond à 40-80% de la longueur de la première ligne de section transversale, en particulier à 50-70%.

4. Cartouche filtrante selon la revendication 1, **caractérisée en ce que** la poche filtrante (400) a un côté longitudinal et un côté large, adaptés aux dimensions de l'espace intérieur de la cartouche filtrante (200), le côté large ayant une longueur inférieure à celle du côté longitudinal, et **en ce que** la première ligne de section transversale est parallèle au côté longitudinal ou parallèle au côté large de la poche filtrante (400).

5. Cartouche filtrante selon l'une des revendications précédentes, **caractérisée en ce que** le renfoncement (404) s'étend le long d'une deuxième ligne de section transversale qui est perpendiculaire à la première ligne de section transversale et suit une ligne droite.

6. Cartouche filtrante selon l'une des revendications précédentes, **caractérisée en ce que** le renfoncement (404) forme un second arc le long d'une seconde ligne de section transversale qui est perpendiculaire à la première ligne de section transversale.

7. Cartouche filtrante selon l'une des revendications précédentes, **caractérisée en ce que** la poche filtrante (400) est fabriquée dans une matière textile, en particulier une matière non tissée.

8. Cartouche filtrante selon l'une des revendications précédentes, **caractérisée en ce que** la poche filtrante (400) présente une partie inférieure de poche (402) qui est fermée par un non-tissé de recouvrement (401), le non-tissé de recouvrement (401) étant relié à la partie inférieure de poche (402) en particulier par liaison de matière, en particulier scellé, soudé ou collé.

9. Dispositif de filtration d'eau doté d'une cartouche filtrante selon l'une des revendications précédentes.
